# EUROPEAN PATENT SPECIFICATION

(11) **EP 1 933 257 B1**
(45) Date of publication and mention of the grant of the patent: **27.02.2013**
(21) Application number: 06125855.4
(22) Date of filing: 12.12.2006
(51) Int. Cl.: B41J 11/68, G06K 15/02, B41J 3/407

(54) **Method to reduce unprinted substrate waste during digital printing**
Verfahren zur Reduzierung von unbedrucktem Substratabfall beim Digitaldrucken
Procédé de réduction des déchets de substrats non imprimés durant l'impression numérique

(43) Date of publication of application: 18.06.2008
(73) Proprietor: Agfa Graphics N.V., 2640 Mortsel (BE)
(72) Inventor: Debaere, Eddy, AGFA-GEVAERT, 2640, Mortsel (BE)
(74) Representative: Goedeweeck, Rudi

(56) References cited:
- WO-A1-01/55869
- US-A1- 2006 260 741
- US-A1- 2006 260 752
- US-B1- 6 295 134

## Description

### FIELD OF THE INVENTION

The invention relates to the field of digital printing. More specifically the invention relates to the field of digital printing devices such as inkjet and toner based printers suitable for applications including label printing, package printing, transactional printing and commercial printing. More specifically the invention is related to digital imposition systems for such applications.

### BACKGROUND OF THE INVENTION

Digital printing differs from conventional printing in that only a digital master exists of a document that is to be printed.

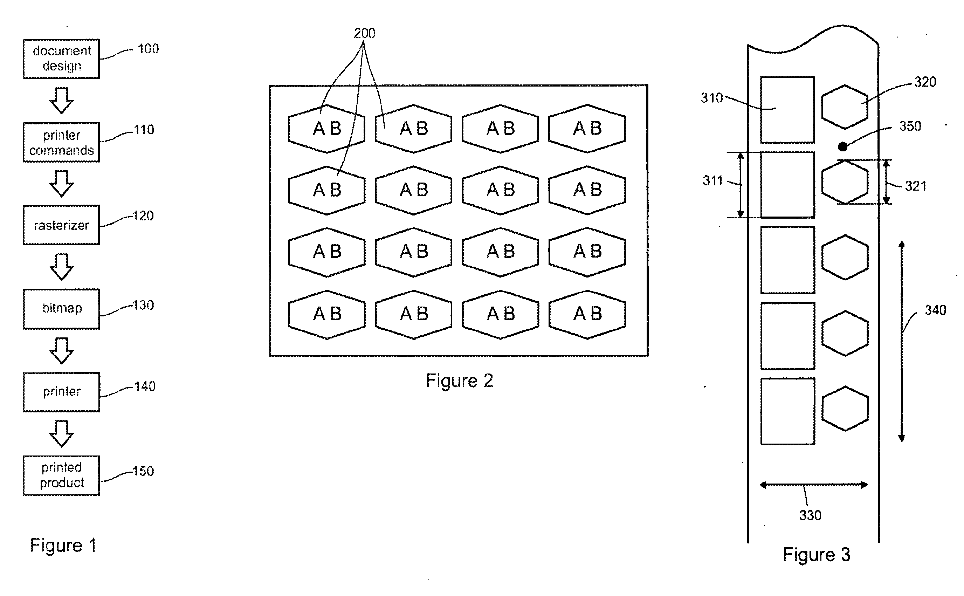

A typical digital printer architecture is shown in Figure 1.

A user interacts with a document design application 100 running on a data processing system and defines a document.

The document is stored in a file as a series of printer commands 110. This file is send to a rasterizer 120 which transforms the printer commands into a bitmap 130 having the same spatial and tonal resolution as the printing device. The bitmap is sent to the printing device 140.

The printing device marks a substrate in response to the density value of the pixels of the bitmap and the result is a printed product 150.

Printer commands are typically represented using a page description language. Examples of page description languages known in the art include PostScript (PS) developed and specified by Adobe Systems Inc.,

Portable Document Format (PDF) developed and specified by the same company and Extensible Paper Specification (XPS) developed by Microsoft Corp. These page description languages represent a page as a collection of graphic objects to be printed. A graphic object can be, for example, text, vector graphics or raster graphics.

Most objects have both contents and attributes. For example, a text block contains text, but also information on how the text should be rendered including a font selection, a font size and a font color. Similarly a graphic contains a graphic contour, but also information on how the contour should be rendered, including the color of a fill, the color and thickness of a boundary etc.

A page description language typically also makes use of a graphics state comprising translation, rotation and scaling information for rendering an object.

The existing page description languages have been designed to print documents that are printed page by page. This approach is suitable for printing a wide range of publications such as office documents, brochures, flyers, newspapers, magazines, packages etc.

The printing of a document that is represented in a page description language conceptually comprises three steps. A first step consists of interpreting the printer commands of the graphic objects that belong to a single page. Interpretation involves translating the graphic objects represented in the page description language into graphic primitives that can be efficiently rasterized. In a next step the interpreted objects are rendered, i.e. a raster image - usually referred to as a bitmap - is calculated that represents the interpreted objects at the printer's resolution. In a final step this bitmap is sent to the printer.

To reduce memory requirements and to increase data processing speed, the second and the third steps can be subdivided into sub-steps, whereby every sub-step corresponds to the calculation of a partial bitmap of pixels and sending said partial bitmap to the printer. The partial bitmaps typically correspond with successive bands of rows of pixels.

Several options exist to organize the printing sequence of multiple copies of a multiple page document.

A first possibility is to print multiple copies of a first page of the document, next multiple pages of a second page and so on until multiple copies of all the pages of the document have been obtained. In a next step the pages are mechanically collated so that multiple copies of the multiple page document are obtained. This first approach is referred to as "mechanical collation".

A second possibility is to print a first copy of all the pages of a multiple page document first, then a second copy, and so on, until all documents have been printed. This second approach is referred to as "digital collation".

The second possibility avoids the need for a mechanical collator, but generally requires the concurrent storage of the bitmaps of all the pages of a document or alternatively re-interpreting and rasterizing every page as it is being printed.

Just as with traditional offset presses, the substrate in digital printers can be sheet or web fed.

A sheet fed digital printer prints on sheets that are stored in a stack. The size of the sheets is rectangular and is usually fixed during a print job. A sheet fed digital press relies on a fairly complex sheet handling mechanism to pick the individual sheets from a stack, to feed them to a print station and to collect the printed sheets. The complexity of a sheet handling mechanism is a bottleneck for achieving high print throughput.

Such a bottleneck does not exist in web-fed systems because the substrate handling is more straightforward.

An example of a web fed based printing device is the Xeikon 5000 digital press marketed by Punch Graphics in Belgium. Another example is the Agfa Dotrix Modular digital press marketed and sold by Agfa-Graphics in Belgium. Web fed presses may or may not comprise an additional paper cutting stage to cut the web into individual pages.

Printed labels are used to identify objects or their contents. They are typically attached to an object using glue or a self-adhesive substrate. Examples of objects include compact discs, bottles, packaging boxes, computers, hardware etc.

### the problem in the prior art as explained for the case of label printing

Labels can have many different shapes, such as rectangular, round, elliptical, star shaped or any other shape.

A label is typically designed using a design software application that is developed for this purpose.

A characteristic of traditional label printing is that the labels that are printed in a print run are all identical. For this purpose a printing master (e.g. an offset printing plate, a flexographic printing plate, a silk printing master) is created using a step and repeat process so that on one single printed sheet many identical labels can be printed. In a post-printing step the individual labels are then cut out or punched out from the printed sheet.

Figure 2 shows an example of a printed sheet on which labels 200 are organized using a step and repeat process.

For certain applications, it is desirable to print labels having variable content. For example, a label can include a serial number of an object for which it is intended. One prior art technique uses a first printing step for printing the fixed contents of the label and an additional printing step for printing the variable data. Usually the first step uses a traditional printing technique, while the second step uses a digital printing technique, for example inkjet printing.

The availability of digital color printing presses enables to print in one single step both the fixed and the variable data.

A variation of a step and repeat process for a web fed printing press is shown in Figure 3, where a first label 310 and a second label 320 are printed on a web. The printed web is collected on a roll.

In a traditional print process the replication in the transversal dimension 330 of the web is obtained by a digital step and repeat process before the print master is made, while replication in a longitudinal dimension 340 of the web is for example obtained by a combination of digital replication and using a rotating print master. The labels 310 and 320 in the transversal dimension may be the same or may be different as is the case in Figure 3.

In a digital print system, the replication in both the transversal and longitudinal dimensions is obtained by means of a digital step and repeat process.

The printing is stopped when the required number of labels is printed.

In a next step the resulting print roll is usually split up by means of a slicing process into a plurality of narrow print rolls each one containing only one label in the transversal dimension of the print roll.

A first problem with a prior art method originates when substantially the same number of labels is needed of a first label 310 having a first length 311 (measured along the longitudinal dimension) and a second label 320 having a second length 321 that is different from said first length. The step and repeat process of both labels in the longitudinal dimension of the web inevitably results in a waste 350 of printed substrate.

A similar problem originates when a first number is needed of a first label having a first length and a second number of a label having a second length, wherein said first and second length are substantially the same, but wherein the first and second numbers are different.

In general, a prior art method results in the waste of printed substrate when a print job comprises printing first 310 and second 320 labels on a single roll, whereby the product of the number of labels times the label length 311, 321 of the two labels is not identical.

WO 01/55869 A1 describes a method for managing print jobs by aggregating discrete print jobs from different customers. The jobs are first aggregated in postscript and rendered on a raster image processor to obtain a bitmap suitable for printing.

US-B1-6 295 134 describes a method for performing the interpretation of two pages from a print job on two different interpreters in parallel.

It is clear that a solution is needed that enables the printing of labels on a web fed printing system in a way that minimizes the waste of unprinted substrate and that at the same time optimizes the use of print capacity along both the longitudinal and transversal dimensions of a web.

The same improved solution is needed for similar problems in digital package printing, transactional printing and commercial printing.

### SUMMARY OF THE INVENTION

The current application involves a method and a system as described in the independent and dependent claims to overcome the limitations of the prior art techniques.

Specifically the method and the system enable to reduce the waste of unprinted substrate in label printing, package printing, transactional printing and commercial printing while optimizing the use of print capacity.

A method and the system according to the invention are particularly suited for use in combination with a web fed digital printing device.

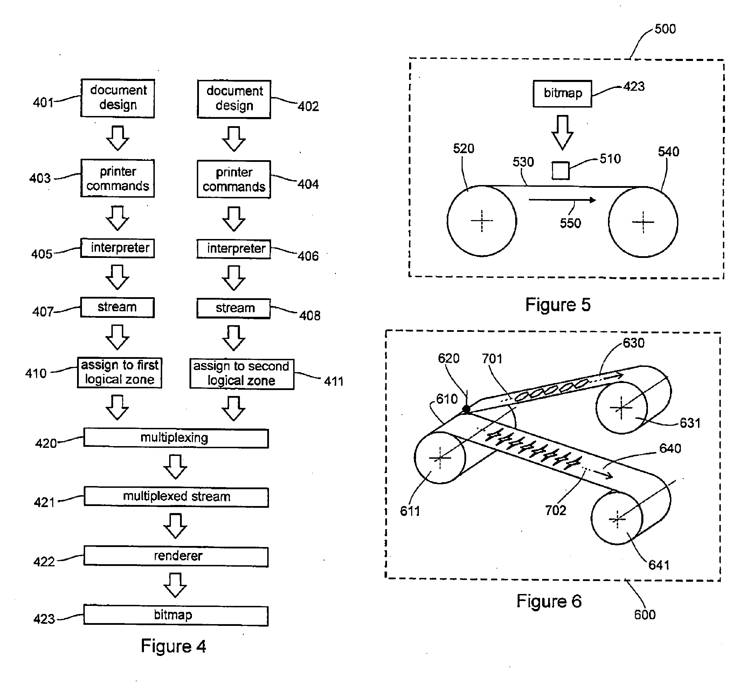

A method according to the current invention is explained by means of Figure 4.

To achieve the above objectives, a user prepares 401, 402 separate documents 403, 404 comprising graphic objects described in a page description language. Each of these documents is then separately interpreted by an interpreter 405, 406 into a stream of interpreted print commands that defines a print job 407, 408.

In a next step these multiple interpreted print command streams 407, 408 are multiplexed by a multiplexer 420 and the multiplexed stream 421 of interpreted print command is rendered by a renderer into a bitmap 423. This bitmap is sent to a printer.

A print job in a specific print zone can be aborted and be followed by another print job, independent of the print jobs in another print zone. The width and/or the length of logical print zones can be fixed or they can dynamically vary as a function of the different print jobs that being printed on the web.

By dynamically assigning multiple print jobs to print zones and dynamically adjusting their length and width, the waste of substrate can be substantially reduced, since each print zone can be given exactly the right dimensions to fit a specific print job.

### BRIEF DESCRIPTION OF THE DRAWINGS

Figure 1 shows the different steps in a prior art method to design and print a document;
Figure 2 shows a print master to print multiple identical labels using a step and repeat technique as known in a prior art technique;
Figure 3 shows a variation of a step and repeat technique adapted for a web fed printing press as known in a prior art technique;
Figure 4 shows the steps of a preferred embodiment of a method according to the current invention;
Figure 5 shows a printing system according to a preferred embodiment of the current invention;
Figure 6 shows a system to splice a web into multiple spliced webs according to a preferred embodiment of the current invention.
Figure 7 shows a segment of a web having two logical print zones and having graphic objects in each print zone.

### DETAILED DESCRIPTION OF THE INVENTION

Figure 4 to 6 show various elements of a system that can be used for carrying out the invention.

### document design and list of printer commands

The invention assumes that separate documents are prepared on one or more document editing systems 401, 402 that faithfully describe what needs to be printed, and that these edited documents are stored as a list of printer commands 403, 404 using a page description language.

In a first example a document is a label and the document editing system is a label editing system. In other examples, a document is the cover of a package, a transactional document or a commercial print document.

The document design systems 401 and 402 may be different systems or they may be the same system that is time-shared. In the embodiment shown in Figure 4, only two printer command lists are shown, but in general there can be any number of printer command lists corresponding to a respective number of documents.

Printer commands are instructions for a rasterizer for rendering graphic objects. Graphic objects can for example be text, vector graphics or raster graphics. The graphic objects have a position on a fictitious canvas that digitally represents the substrate on which the objects are to be printed. The rendering of graphic objects involves transforming said objects into a bitmap having the same spatial and tone resolution as a printing device.

A text object comprises text and information on how the text should be rendered, including a font type, a font size, and a font rendering intent (normal, bold, underlined, lowercase, italic, color...).

A vector graphic comprises a description of the contour of the graphic as well as information on how these contours should be rendered, including the color of the fill and the thickness and color of the boundaries.

A raster image object comprises a map or matrix of pixel values and a translation, scaling and rotation matrix that maps the raster image to a specific position on the canvas.

Every graphic object is rendered at a current point, which is a fictitious point on the canvas. Special printer commands are available to set or change the current point to affect the position of a graphic object.

Every graphic object is optionally accompanied with an additional translation, scaling and rotation matrix to translate, scale or rotate said object on the canvas.

Graphic objects are rendered in the order they are listed. They may spatially overlap. A graphic object that occurs later in a list may overlap and cover a graphic object that occurs earlier in the same list. The overlapping of a first object over a second object may be opaque in which case the first object hides the second object in the overlapping area, or it may be transparent, in which case the two objects visually blend.

Special printer commands also exist to repeat the rendering of specific graphic objects or groups of graphic objects.

### interpreter

The lists of printer commands 403, 404 are sent to interpreters 405, 406. In one example a single interpreter is used that is time shared to interpret multiple printer command lists.

An interpreter 405, 406 interprets a list of printer commands 403, 404 and produces an interpreted stream of printer commands 407, 408. Interpreting involves determining a bounding box, i.e. a rectangular area on the canvas that entirely contains the graphic object. Interpreting a graphic object also involves transforming said object into a set of graphic primitives that are visually equivalent when rendered, but that enable fast rendering. For example, a circle can be transformed into a contiguous set of trapezoids that closely approximate said circle when rendered at the resolution of a specific printing device, and a character can be transformed into a bitmap having the tonal and spatial resolution of a printing device. In a preferred example, interpreting involves rasterizing text objects. In a very preferred example of the current invention, every character having a specific font type and font size that occurs in a text object is rasterized only once, and an interpreted text object comprises the rasterized characters and a sequence of locations where said rasterized characters occur in the text object.

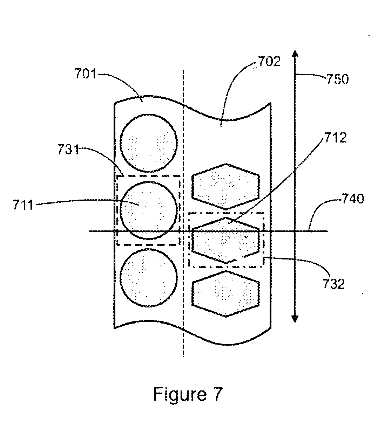

Interpreting a list of printer commands may also involve a step and repeat process, for example a step and repeat process in the transversal and/or the longitudinal dimensions. Referring to Figure 7 a first graphic object or primitive 711 belonging to a first document is replicated along the longitudinal dimension 750 of a web of a printing device by means of a step and repeated process.

Referring again to Figure 7, an interpreter associates with every graphic object or graphic primitive 711, 712 a bounding box 731, 732. This bounding box indicates the spatial scope of a graphic object or primitive.

Unlike traditional page description languages such as PostScript (TM) or PDF (TM), a stream of printer commands does not have to be page oriented. In principle, a stream can describe a document having an infinite length. A stream of printer commands is therefore suitable to describe a series of objects that are to be printed on a web based digital printing device.

### logical print zone

According to the current invention, the substrate of a printer is subdivided into logical print zones. A logical print zone is a printable area on a specific substrate having a shape and having dimensions that is defined on the unprinted stock where a print job is to be printed.

In the case of web based digital printing device, a logical print zone may for example correspond to a rectangular area on a web of a specific stock having a length and a width that is optimized for a specific print job to comprise the printing of a specific number of specific labels.

A method according to the current invention preferably involves assigning (410, 411) a specific stream of interpreted printer commands 407, 408 to a specific logical print zone (701, 702) on a web of a printing system. This assignment may include a geometrical translation or another geometrical transformation such a rotation or scaling of interpreted objects.

The effect of a multiplexing operation is also explained by means of Figure 7. A first interpreted object 711 is assigned to a first logical print zone 701 and a second interpreted object 712 is assigned to a second logical print zone 702.

The assignment is preferably dynamic in that the number of logical print zones, their width and length and the streams that are assigned to them may vary while the printing on the web takes place.

This dynamic multiplexing is preferably done in a way that minimizes the waste of unprinted stock during printing, taking into account the number and size of the labels that are to be printed. This is achieved not just by adjusting the area of a single logical print zone to a specific print job, but by optimizing the use of the complete area on a roll or on multiple rolls of unprinted stock as a function of multiple print jobs. In this document this is called "dynamic assignment".

### multiplexer

The multiple streams of interpreted printer commands 407, 408 are multiplexed by a multiplexer 420.
The stream of multiplexed data is conceptually not limited in length.

### renderer

The multiplexed interpreted printer command stream 421 is sent to a renderer 422.

The renderer 422 renders the graphic primitives, i.e. calculates the values of the pixels of the bitmap that have the same tonal and spatial resolution as a printing device.

The principles of rendering graphic objects are known to a person skilled in the art and are for example found in the chapter "Basic Raster Graphics Algorithms for Drawing 2D Primitives" in the book "Introduction to Computer Graphics", edited by James D. Foley... [et al] published by Addison-Wesley Publishing Company in New York.

The advantage of transforming objects into graphic primitives in a first step and rendering said graphic primitives into a bitmap in a second step is that the overall transformation process can be implemented more efficiently because the rendering of the graphic primitives can be implemented computationally more efficiently than the direct rendering of complex objects.

According to a preferred embodiment of the current invention, the rendering of graphic primitives is done by means of a graphic primitive processor that is, for example, implemented using software embedded on a Field Programmable Gate Array (FPGA).

The rendering process of graphic primitives is preferably organized in row by row and pixel by pixel fashion.

Referring to Figure 7, to render an active row 740 of pixels (i.e. a row of pixels that is being rendered), a list of active interpreted objects is consulted. An interpreted object is said to be active if its associated bounding box overlaps with the active row of pixels. As the rendering process proceeds and the rows of pixels are processed, new interpreted objects come into scope and become active and other interpreted objects go out of scope and become non-active. For this purpose the active interpreted object list is updated every time a row of pixels has been rendered.

Because the rendering of graphic objects and raster image objects typically produces pixels having a tonal resolution (for example 8 bits per colorant component) that is higher than the tonal resolution (for example 1 bit per colorant component) of a printing device, the rendered pixels are halftoned in a halftoning step to obtain a bitmap having pixels at the same tonal resolution of said printing device. Halftoning methods are well known to a person skilled in the art and include, for example, the "error diffusion" algorithm.

Referring again to Figure 4, the end result of the rendering step is a bitmap 423 that is ready to be sent to a printing device.

The bitmap 423 that is produced by the renderer 422 is preferably buffered in bands of rows of pixels.

### printing device

According to a preferred embodiment, the printing device is web fed printing device 500. It comprises a first roll 520 containing unprinted stock, a web 530 and a roll containing printed stock 540. The web moves in a in a direction 550 and printing takes place at a marking station 510. The marking station can be inkjet, toner based or any other marking station. It can be a monochrome or a color marking station. The marking station puts colorant onto the web in response to the pixel values of the bitmap 423 that is sent to the printing device 500. The printing device comprises a buffer (not shown in Figure 5) that can contain a band of rows of pixels produced by the renderer. Web based digital printing systems are well known to a person skilled in the art and they are not further elaborated here.

The bitmap that is rendered and printed is conceptually not limited in a transversal dimension 550 of a web. In practice, a renderer will stop rendering when a print job is finished or when the first roll 520 of unprinted stock stops feeding the web 530.

### slicing device.

According to a preferred embodiment, a system according to the current invention also comprises a slicing device 600 to slice a single web 610 on a roll 611 into multiple webs 630, 640 on rolls 631, 641. The slicing is for example achieved by means of a cutter 620, which cuts the original web 610 along the boundary between two print zones 701, 702. Alternatively a different method for cutting the web is used such as a laser based slicing system. In yet another alternative a laser based die cutter is used to cut out the individual labels. The multiple webs 630, 640 are rolled on rollers 631, 641 for storage.

Slicing devices are well known to a person skilled in the art and they are not further elaborated here.

### cutter

In a later stage, a cutter can cut a web 630 on a roller 631 into individual documents.

## Claims

1. A method for rendering multiple print jobs on a web fed printing system, the method comprising the steps of:
- creating first (401) and second (402) documents, said documents comprising a first list (403) and a second list (404) of printer commands;
- interpreting (405, 406) said first (403) and said second list of printer commands to obtain first (407) and second (408) streams of graphic primitives defining first and second print jobs;
the method **characterized in that** it additionally comprises the steps of:
- assigning (410) said first print job to a first logical print zone on the web where the first job will be printed;
- assigning (411) said second print job to a second logical print zone on the web where the second job will be printed;
- multiplexing (420) said first and said second streams of graphic primitives to obtain a multiplexed stream (421) of graphic primitives;
- rendering (422) said multiplexed stream of graphic primitives to obtain a multiplexed bitmap (423) addressing both said first and said second logical print zones.

2. A method according to claim 1, where the interpreting step involves a step and repeat process.

3. A method comprising the steps of rendering multiple print jobs according to anyone of the claims 1 or 2, of sending said multiplexed bitmap, and printing said multiplexed bitmap on a substrate.

4. A method according to claim 3, wherein said printing is an inkjet printing method.

5. A method according to anyone of the claims 3 or 4 additionally comprising a step of:
- slicing said printed substrate.

6. A method according to anyone of the claims 1 to 5, in which the width and/or length of the logical printing zones vary while the printing on the web takes place.

7. A method according to anyone of the claims 1 to 6, wherein said assigning to a logical zone is different for different print jobs.

8. A system for rendering printer commands on a web feed printing system, the system comprising:
- means (405) for receiving and interpreting a first stream of printer commands (403) to obtain a first stream of graphic primitives (407) defining a first print job;
- means (406) for receiving and interpreting a second stream of printer commands (404) to obtain a second stream of graphic primitives (408) defining a second print job;
the system **characterized in that** it additionally comprises:
- means (410) for assigning said first print job to a first logical printing zone on the web where the first job will be printed;
- means (411) for assigning said second print job to a second logical printing zone on the web where the second job will be printed;
- means (420) for multiplexing said first printer commands assigned to said first logical print zone with said second stream of graphic primitives assigned to said second logical print zone to obtain a multiplexed stream of graphic primitives (421);
- means (422) for rendering said multiplexed stream of graphic primitives to obtain a multiplexed bitmap (423) addressing both said first and said second logical print zones.

9. A system according to claim 8, the system additionally comprising:
- means for printing said multiplexed bitmap on a substrate.

10. A system according to claim 9, wherein said means for printing a multiplexed bitmap comprises an inkjet printer.

11. A system according to anyone of the claims 9 or 10, additionally comprising a slicing system for slicing said substrate into said first printed zone and said second printed zone.

12. A system according to anyone of the claims 8 to 11, wherein said means for rendering comprises a Field Programmable Gate Array.

## Patentansprüche

1. Verfahren zum Rendern mehrerer Druckaufträge auf einem Rollendrucksystem, wobei das Verfahren die folgenden Schritte umfasst :
- Erstellen eines ersten Dokuments (401) und eines zweiten Dokuments (402), wobei diese Dokumente eine erste Liste (403) und eine zweite Liste (404) von Druckerbefehlen umfassen,
- Interpretieren (405, 406) der ersten (403) und zweiten Liste von Druckerbefehlen, um einen ersten Strom (407) und einen zweiten Strom (408) grafischer Primitive, die den ersten und zweiten Druckauftrag definieren, zu erhalten,
wobei das Verfahren **dadurch gekennzeichnet ist, dass** es zusätzlich folgende Schritte umfasst :
- Zuordnen (410) des ersten Druckauftrags zu einem ersten logischen Druckbereich auf der Bahn, auf welcher der erste Auftrag gedruckt wird,
- Zuordnen (411) des zweiten Druckauftrags zu einem zweiten logischen Druckbereich auf der Bahn, auf welcher der zweite Auftrag gedruckt wird,
- Multiplexen (420) des ersten und zweiten Stroms grafischer Primitive, um einen gemultiplexten Strom (421) grafischer Primitive zu erhalten,
- Rendern (422) des gemultiplexten Stroms grafischer Primitive, um eine gemultiplexte Bitmap (423), die den ersten sowie den zweiten logischen Druckbereich umfasst, zu erhalten.

2. Verfahren nach Anspruch 1, **dadurch gekennzeichnet, dass** der Interpretierschritt einen Repetiervorgang umfasst.

3. Verfahren, das als Schritte das Rendern mehrerer Druckaufträge nach einem der Ansprüche 1 oder 2, das Senden der gemultiplexten Bitmap und das Drucken der gemultiplexten Bitmap auf einem Substrat umfasst.

4. Verfahren nach Anspruch 3, **dadurch gekennzeichnet, dass** der Druck ein Tintenstrahldruckverfahren ist.

5. Verfahren nach einem der Ansprüche 3 oder 4, das zusätzlich einen Schritt umfasst, in dem :
- das bedruckte Substrat zugeschnitten wird.

6. Verfahren nach einem der Ansprüche 1 bis 5, in dem die Breite und/oder Länge der logischen Druckbereiche während des Bedruckens der Bahn variiert (variieren).

7. Verfahren nach einem der Ansprüche 1 bis 6, **dadurch gekennzeichnet, dass** die Zuordnung zu einem logischen Bereich für unterschiedliche Druckaufträge variiert.

8. System zum Rendern von Druckerbefehlen auf einem Rollendrucksystem, wobei das System folgende Elemente umfasst :
- ein Mittel (405) zum Empfangen und Interpretieren eines ersten Stroms von Druckerbefehlen (403), um einen ersten Strom grafischer Primitive (407), der einen ersten Druckauftrag definiert, zu erhalten,
- ein Mittel (406) zum Empfangen und Interpretieren eines zweiten Stroms von Druckerbefehlen (404), um einen zweiten Strom grafischer Primitive (408), der einen zweiten Druckauftrag definiert, zu erhalten,
wobei das System **dadurch gekennzeichnet ist, dass** es zusätzlich folgende Mittel umfasst :
- ein Mittel (410), um den ersten Druckauftrag zu einem ersten logischen Druckbereich auf der Bahn, auf welcher der erste Auftrag gedruckt wird, zuzuordnen,
- ein Mittel (411) um den zweiten Druckauftrag zu einem zweiten logischen Druckbereich auf der Bahn, auf welcher der zweite Auftrag gedruckt wird, zuzuordnen,
- ein Mittel (420) zum Multiplexen der ersten, dem ersten logischen Druckbereich zugeordneten Druckerbefehle mit dem zweiten Strom grafischer Primitive, die dem zweiten logischen Druckbereich zugeordnet sind, um einen gemultiplexten Strom grafischer Primitive (421) zu erhalten,
- ein Mittel (422) zum Rendern des gemultiplexten Stroms grafischer Primitive, um eine gemultiplexte Bitmap (423), die den ersten sowie den zweiten logischen Druckbereich umfasst, zu erhalten.

9. System nach Anspruch 8, wobei das System zusätzlich folgendes Mittel umfasst :
- ein Mittel zum Drucken der gemultiplexten Bitmap auf einem Substrat.

10. System nach Anspruch 9, **dadurch gekennzeichnet, dass** das Mittel zum Drucken einer gemultiplexten Bitmap einen Tintenstrahldrucker umfasst.

11. System nach einem der Ansprüche 9 oder 10, das zusätzlich ein Schneidesystem zum Zuschneiden des Substrats in den ersten bedruckten Bereich und den zweiten bedruckten Bereich umfasst.

12. System nach einem der Ansprüche 8 bis 11, **dadurch gekennzeichnet, dass** der Renderer einen Field Programmable Gate Array umfasst.

## Revendications

1. Procédé pour le rendu de multiples travaux d'impression sur un système d'impression rotative, ledit procédé comprenant les étapes reprises ci-après :
- la création d'un premier document (401) et d'un deuxième document (402), lesdits documents comprenant une première liste (403) et une deuxième liste (404) de commandes d'imprimante,
- l'interprétation (405, 406) de la première liste (403) et de la deuxième liste de commandes d'imprimante afin d'obtenir un premier flux (407) et un deuxième flux (408) de primitives graphiques définissant les premier et deuxième travaux d'impression,
ledit procédé étant **caractérisé en ce qu'**il comprend les étapes supplémentaires reprises ci-après :
- l'assignation (410) du premier travail d'impression à une première zone d'impression logique sur la bande sur laquelle le premier travail sera imprimé,
- l'assignation (411) du deuxième travail d'impression à une deuxième zone d'impression logique sur la bande sur laquelle le deuxième travail sera imprimé,
- le multiplexage (420) des premier et deuxième flux de primitives graphiques afin d'obtenir un flux multiplexé (421) de primitives graphiques,
- le rendu (422) du flux multiplexé de primitives graphiques afin d'obtenir un bitmap multiplexé (423) adressant les première et deuxième zones d'impression logiques.

2. Procédé selon la revendication 1, **caractérisé en ce que** l'étape d'interprétation comprend un processus d'exécution et de répétition.

3. Procédé comprenant les étapes du rendu de multiples travaux d'impression selon l'une quelconque des revendications 1 ou 2, de l'envoi du bitmap multiplexé et de l'impression du bitmap multiplexé sur un substrat.

4. Procédé selon la revendication 3, **caractérisé en ce que** l'impression est un procédé d'impression à jet d'encre.

5. Procédé selon l'une quelconque des revendications 3 ou 4, comprenant l'étape supplémentaire consistant à :
- découper le substrat imprimé.

6. Procédé selon l'une quelconque des revendications 1 à 5, dans lequel la largeur et/ou la longueur des zones d'impression logiques varie(nt) lors de l'impression de la bande.

7. Procédé selon l'une quelconque des revendications 1 à 6, **caractérisé en ce que** l'assignation à une zone logique est différente pour différents travaux d'impression.

8. Système pour le rendu de commandes d'imprimante sur un système d'impression rotative, ledit système comprenant les moyens repris ci-après :
- un moyen (405) servant à recevoir et interpréter un premier flux de commandes d'imprimante (403) afin d'obtenir un premier flux de primitives graphiques (407) définissant un premier travail d'impression,
- un moyen (406) servant à recevoir et interpréter un deuxième flux de commandes d'imprimante (404) afin d'obtenir un deuxième flux de primitives graphiques (408) définissant un deuxième travail d'impression,
ledit système étant **caractérisé en ce qu'**il comprend les moyens supplémentaires repris ci-après :
- un moyen (410) servant à assigner un premier travail d'impression à une première zone d'impression logique sur la bande sur laquelle le premier travail sera imprimé,
- un moyen (411) servant à assigner un deuxième travail d'impression à une deuxième zone d'impression logique sur la bande sur laquelle le deuxième travail sera imprimé,
- un moyen (420) servant à multiplexer les premières commandes d'imprimante assignées à la première zone d'impression logique avec le deuxième flux de primitives graphiques assignées à la deuxième zone d'impression logique, afin d'obtenir un flux multiplexé de primitives graphiques (421),
- un moyen (422) servant au rendu du flux multiplexé de primitives graphiques afin d'obtenir un bitmap multiplexé (423) adressant les première et deuxième zones d'impression logiques.

9. System selon la revendication 8, ledit système comprenant en outre :
- un moyen assurant l'impression du bitmap multiplexé sur un substrat.

10. system selon la revendication 9, **caractérisé en ce que** le moyen d'impression d'un bitmap multiplexé comprend une imprimante à jet d'encre.

11. System selon l'une quelconque des revendications 9 ou 10, comprenant en outre un système de découpage servant à découper le substrat en ladite première zone imprimée et ladite deuxième zone imprimée.

12. System selon l'une quelconque des revendications 8 à 11, **caractérisé en ce que** le moyen servant au rendu comprend un Field Programmable Gate Array.
